(19) Europäisches Patentamt
European Patent Office
Office européen des brevets

(11) **EP 2 981 711 B1**

(12) **EUROPÄISCHE PATENTSCHRIFT**

(45) Veröffentlichungstag und Bekanntmachung des Hinweises auf die Patenterteilung:
**04.07.2018 Patentblatt 2018/27**

(21) Anmeldenummer: **14709552.5**

(22) Anmeldetag: **07.03.2014**

(51) Int Cl.:
**F03D 7/04** *(2006.01)*    **F03D 13/00** *(2016.01)*

(86) Internationale Anmeldenummer:
**PCT/EP2014/000586**

(87) Internationale Veröffentlichungsnummer:
**WO 2014/161626 (09.10.2014 Gazette 2014/41)**

(54) **EFFIZIENZÜBERWACHUNGSVERFAHREN EINES WINDENERGIEANLAGENPARKS**

EFFICIENCY MONITORING METHOD OF A WIND FARM

PROCÉDÉ DE SURVEILLANCE DU RENDEMENT D'UN PARC D'ÉOLIENNES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.04.2013 DE 102013205838**

(43) Veröffentlichungstag der Anmeldung:
**10.02.2016 Patentblatt 2016/06**

(73) Patentinhaber: **Senvion GmbH**
**22297 Hamburg (DE)**

(72) Erfinder: **MITTELMEIER, Niko**
**22303 Hamburg (DE)**

(74) Vertreter: **Wallinger Ricker Schlotter Tostmann Patent- und Rechtsanwälte mbB**
**Zweibrückenstraße 5-7**
**80331 München (DE)**

(56) Entgegenhaltungen:
**DE-A1-102011 081 241**

**Beschreibung**

Die Erfindung betrifft ein Verfahren zur Effizienzüberwachung eines Windenergieanlagenparks.

Für einen Betreiber eines Windenergieanlagenparks ist es sehr wichtig zu wissen, ob die Effizienz des Parks sich im Laufe des Betriebs des Windenergieanlagenparks verändert, um gegebenenfalls Eingriffe vornehmen zu können, die einen möglichst hohen Windenergieanlagenparkertrag gewährleisten. Da es bei einem Windenergieanlagenpark viele Randbedingungen bzw. Parameter geben kann, die den Leistungsertrag bzw. Energieertrag beeinflussen, ist eine Effizienzüberwachung entsprechend komplex.

DE 10 2011 081 241 A1 offenbart ein Verfahren zur Ermittlung eines Energieertragsverlustes einer ersten und alleinigen Windenergieanlage aus einem Windenergieanlagenpark mit mehreren Windenergieanlagen.

Es ist Aufgabe der vorliegenden Erfindung, ein Verfahren zur Effizienzüberwachung eines Windenergieanlagenparks anzugeben, das verlässlich die Effizienz des Windenergieanlagenparks bestimmbar und vergleichbar und damit überwachbar macht.

Gelöst wird diese Aufgabe durch ein Verfahren zur Effizienzüberwachung eines Windenergieanlagenparks mit den folgenden Verfahrensschritten:

- Messen wenigstens einer Windgeschwindigkeit und einer Windrichtung über eine vorgebbare Zeitperiode,

- Messen einer Leistung des Windenergieanlagenparks in der vorgebbaren Zeitperiode,

- Zuordnung der Leistung zu der gemessenen Windgeschwindigkeit und der gemessenen Windrichtung,

- Speichern der Leistung als Leistungswert in eine erste Leistungsmatrix, in der Matrixelemente verschiedenen Parametern, umfassend wenigstens Windgeschwindigkeiten und Windrichtungen, zugeordnet sind, sofern die Leistung einen repräsentativen Wert für den Windenergieanlagenpark darstellt,

- Vorsehen einer ersten Zählmatrix mit Matrixelementen, die den verschiedenen Parametern, umfassend wenigstens Windgeschwindigkeiten und Windrichtungen, zugeordnet sind,

- Addieren eines Zählwertes zu dem Matrixelement der ersten Zählmatrix, das der gemessenen Windgeschwindigkeit und der gemessenen Windrichtung entspricht,

- wobei die vorstehenden Verfahrensschritte für eine Vielzahl von vorgebbaren Zeitperioden in einer Referenzzeitdauer ausgeführt werden,

- wobei in einer späteren Überwachungszeitdauer die folgenden Verfahrensschritte für eine Vielzahl von vorgebbaren Zeitperioden ausgeführt werden:

  - Messen wenigstens der Windgeschwindigkeit und der Windrichtung über die vorgebbare Zeitperiode,

  - Messen einer Leistung des Windenergieanlagenparks in der vorgebbaren Zeitperiode,

  - Vorsehen einer zweiten Zählmatrix mit Matrixelementen, die den verschiedenen Parametern, umfassend wenigstens Windgeschwindigkeiten und Windrichtungen, zugeordnet wird,

  - Addieren eines Zählwertes zu dem Matrixelement der zweiten Zählmatrix, das der gemessenen Windgeschwindigkeit und der gemessenen Windrichtung entspricht,

- wobei zur Effizienzüberwachung ein Vergleich der mit der zweiten Zählmatrix gewichteten Leistungswerte der ersten Leistungsmatrix mit der Summe der während der Überwachungszeitdauer gemessenen Leistungen erfolgt.

Ein Wichten der Leistungswerte der ersten Leistungsmatrix oder einer anderen Leistungsmatrix bedeutet im Rahmen der Erfindung, dass die in einer ersten oder zweiten Zählmatrix gespeicherten Parameterwerte, die die Windrichtung und die Windgeschwindigkeit umfassen, allerdings auch andere Parameter enthalten können, berücksichtigt werden.

Hierbei werden beispielsweise die Leistungswerte der ersten Leistungsmatrix, sofern es sich bei den Leistungswerten beispielsweise um gemittelte Leistungen handelt, mit dem zugehörigen Wert der zweiten Zählmatrix multipliziert. Hierdurch ergibt sich dann eine Leistung, die in dem Überwachungszeitraum erzielt worden wäre, wenn der Windenergieanlagenpark die Qualität des Windenergieanlagenparks gehabt hätte, wie dieses während der Referenzzeitdauer gewesen ist.

In der Leistungsmatrix können jeweils Matrixelemente vorhanden sein, die eine gemittelte Leistung darstellen. Es kann auch die Gesamtleistung abgespeichert werden oder ein prozentualer Anteil einer Leistung bzw. eines Leistungswertes an der Gesamtleistung des Windenergieanlagenparks.

Eine Wichtung der Leistungswerte durch die in der Zählmatrix, insbesondere der zweiten Zählmatrix, vorgesehenen Matrixelemente geschieht je nachdem, welche Matrixelemente in der Leistungsmatrix gespeichert sind, auf unterschiedliche Art. Sofern ein Mittelwert einer Leistung abgespeichert ist, wird das entsprechende Matrixelement der Leistungsmatrix mit dem zugehörigen Matrixelement der Zählmatrix multipliziert.

Wenn eine Summe der Leistungen in den Matrixelementen der Leistungsmatrix abgespeichert ist, wird zunächst die Summe durch die in einer ersten Zählmatrix gespeicherten Werte in den jeweiligen Matrixelementen geteilt, um dann mit dem zugehörigen Matrixelement in der zweiten Zählmatrix zu multiplizieren. Sofern ein prozentualer Anteil in der Leistungsmatrix zu der Gesamtleistung des Windenergieanlagenparks gespeichert ist, werden die gleichen Operationen wie vorstehend durchgeführt, allerdings wird die prozentuale Leistung noch mit der Gesamtleistung des Windenergieanlagenparks multipliziert.

Im Rahmen der vorliegenden Erfindung umfasst ein Windenergieanlagenpark insbesondere mehrere Windenergieanlagen. Es ist vorzugsweise ein Messmast vorgesehen, der im Windenergieanlagenpark aufgestellt ist und entfernt von den Windenergieanlagen positioniert ist. Mittels des Messmastes können verlässlich eine Windgeschwindigkeit und eine Windrichtung gemessen werden. Alternativ kann die Windmessung auch durch, insbesondere kalibrierte, Gondelanemometer erfolgen.

Das Verfahren wird bevorzugt auf den gesamten Windenergieanlagenpark angewendet, kann aber natürlich auch nur auf Teile eines Windenergieanlagenparks angewendet werden. Dies ist zum Beispiel dann besonders vorteilhaft, wenn es sich um einen Windenergieanlagenpark mit unterschiedlichen Anlagentypen handelt und jeder Typ gesondert evaluiert werden soll.

Die gemessene Windgeschwindigkeit wird bevorzugt mittels Temperatur und Luftdruckmessung auf die vorliegende Luftdichte korrigiert. Diesbezügliche Verfahren sind im Stand der Technik bekannt. Auch die Luftfeuchtigkeit kann vorteilhaft zur Erhöhung der Genauigkeit in einer Windgeschwindigkeitskorrektur berücksichtigt werden.

Die vorgebbare Zeitperiode kann im Rahmen der Erfindung vorzugsweise im Bereich von 2 Minuten bis 20 Minuten sein, insbesondere 10 Minuten betragen. Es können auch andere Zeitperioden vorgesehen sein. In der vorgegebenen Zeitperiode werden die Geschwindigkeit und die Windrichtung gemessen und auch eine Leistung des Windenergieanlagenparks. Die Leistung des Windenergieanlagenparks kann beispielsweise die Summe der gemessenen Leistungen jeder Windenergieanlage sein, die in Betrieb ist, oder die von dem Windenergieanlagenpark in ein Netz abgegebene Leistung.

Vorzugsweise ist eine Zählmatrix eine Parameterverteilungsmatrix, insbesondere eine Windverteilungsmatrix.

Vorzugsweise werden die Verfahrensschritte für eine repräsentative Vielzahl von vorgebbaren Zeitperioden in der Referenzzeitdauer und der Überwachungszeitdauer durchgeführt. Eine repräsentative Vielzahl von Zeitperioden bedeutet insbesondere, dass die Gesamtheit der Zeitperioden repräsentativ für die Referenzzeitdauer bzw. Überwachungszeitdauer ist. Dies bedeutet insbesondere, dass die Verteilung des Parameters oder der Parameter, zum Beispiel die Windrichtung und/oder Windstärke in der zugrunde gelegten Vielzahl von Zeitperioden repräsentativ für die gesamte Referenz- bzw. Überwachungszeitdauer sein sollte. Zum Beispiel kann eine Jahreswindverteilung mit der gewünschten Genauigkeit wiedergegeben sein. Ist eine 100% Genauigkeit gefordert, muss die Messung ununterbrochen durchgeführt werden.

Vorzugsweise wird während der Überwachungszeitdauer eine zweite Leistungsmatrix dadurch gebildet, dass die in der Überwachungszeitdauer gemessenen Leistungen zu den in der jeweiligen Zeitperiode gemessenen Windgeschwindigkeiten und Windrichtungen zugeordnet werden und dass die Leistungen als Leistungswerte in der zweiten Leistungsmatrix gespeichert werden, wobei den Leistungswerten in der zweiten Leistungsmatrix verschiedene Parameter, umfassend wenigstens Windgeschwindigkeiten und Windrichtungen, zugeordnet sind.

Vorzugsweise wird das Verfahren ausgeführt bzw. werden die entsprechenden Messwerte nur dann aufgenommen, wenn alle Windenergieanlagen des Windenergieanlagenparks in Betrieb sind. Alternativ ist darauf zu achten, dass die Konfiguration während der Referenzzeit auch der Konfiguration während des Überwachungszeitraums entspricht. Beim Zuordnen der Leistung zu der gemessenen Windgeschwindigkeit und der gemessenen Windrichtung wird die gemessene Leistung bei der gemessenen Windgeschwindigkeit und der gemessenen Windrichtung diesen Randparametern entsprechend zugeordnet. Anschließend wird dann dieser Leistungswert gespeichert in einer ersten Leistungsmatrix. Die Leistungsmatrix weist hierbei Matrixelemente auf, die den Parametern Windgeschwindigkeit und Windrichtung zugeordnet sind. So kann in diesem Fall die Matrix zwei Tupel bzw. eine Matrix mit zwei Dimensionen sein, deren eine Dimension die Windrichtung ist und die andere Dimension die Windgeschwindigkeit. Beispielsweise können Windgeschwindigkeiten von einem Meter pro Sekunde bis 25 Meter pro Sekunde vorgesehen sein, und zwar in Schritten von ein Meter pro Sekunde, und somit 26 Werte für die Windgeschwindigkeit in der Windgeschwindigkeitsdimension bzw. dem Windgeschwindigkeitstupel der Leistungsmatrix vorgesehen sein. Entsprechend kann auch die Windrichtung in Sektionen eingeteilt sein, beispielsweise in fünf Grad-Einteilungen oder in zehn Grad- oder 15 Grad-Einteilungen oder anderen Einteilungen, die für den jeweiligen Windenergieanlagenpark sinnvoll erscheinen. Bei beispielsweise zehn Grad-Einteilungen sind somit 36 verschiedene Windrichtungen bzw. Windrichtungswerte möglich. Es ergibt sich damit beispielsweise bei den oben genannten Beispielen eine Matrix mit 26 mal 36 Werten, in die entsprechende Leistungswerte gespeichert werden.

Die Leistungswerte werden im Referenzzeitraum vorzugsweise nur gespeichert, wenn sie repräsentativ für den Windenergieanlagenpark sind. Dies bedeutet insbesondere auch eine im üblichen Rahmen liegende Anlagenverfügbarkeit. Sind zum Beispiel aufgrund eines extrem seltenen Wetterereignisses eine große Anzahl von Windenergieanlagen vereist und bringen somit nicht ihre übliche Leistung, wird ein solcher Zustand bevorzugt nicht in die Leistungsmatrix des Referenzzeitraumes bzw. des Überwachungszeitraums gespeichert.

Es ist zudem eine erste Zählmatrix vorgesehen, die auch entsprechend viele Dimensionen im Hinblick auf die verschiedenen Parameter wie Windgeschwindigkeit und Windrichtung aufweist. Bei dem oben genannten Beispiel ergeben sich auch 26 mal 35 Matrixelemente, die in der Zählmatrix beschrieben werden können. Bei einer entsprechend gemessenen Windgeschwindigkeit und einer entsprechend gemessenen Windrichtung wird somit dann ein Zählwert wie beispielsweise eine eins zu dem Matrixelement, das diesen gemessenen Parametern (Windgeschwindigkeit und Windrichtung) entspricht, hinzuaddiert. Wenn somit zum ersten Mal beispielsweise ein Wind mit einer Windstärke von fünf Metern pro Sekunde aus 200° Windrichtung gemessen wurde, erhält dieses hierzu gehörige Matrixelement den Wert eins. Wenn dieses zum dritten Mal geschieht, erhält das zugehörige Matrixelement den Wert drei. Diese Schritte werden für eine Vielzahl der vorgebbaren Zeitperioden in einer Referenzzeitdauer ausgeführt, was dazu führt, dass zum einen die Matrixelemente der Leistungsmatrix mit Leistungswerten vollgeschrieben werden und entsprechend die erste Zählmatrix vollgeschrieben wird. Die erste Zählmatrix kann dann als eine Art Windverteilungsmatrix über die Referenzzeitdauer angesehen werden.

Bevorzugt umfassen die Leistungsmatrix und die Zählmatrix die gleichen Parameter bzw. ein gleiches Parametertupel. Es ist jedoch auch möglich, in einer der Matrizen, zum Beispiel der Zählmatrix, zusätzliche Parameter, wie zum Beispiel den Windgradienten, zu erfassen. Bei der Wichtung der Leistungsmatrix mit der Zählmatrix werden dann alle Windgradientenklassen zusammengefasst. Dies hat den Vorteil, dass für den Fall, dass später ein Zusammenhang zwischen Windgradient und Leistung bekannt ist, dieser im Nachhinein bewertet werden kann.

Die Leistungswerte, die in der ersten Leistungsmatrix abgespeichert werden, sind vorzugsweise entsprechende Mittelwerte der in den jeweiligen Matrixelementen abzuspeichernden Leistungswerte. Wenn beispielsweise in der Referenzzeitdauer für eine bestimmte Windrichtung und eine bestimmte Windstärke fünfhundert Mal Leistungen aufgenommen wurden, sind die Leistungswerte, die in dem entsprechenden Matrixelement der ersten Leistungsmatrix abgespeichert werden, die Summe der fünfhundert gemessenen Leistungswerte durch fünfhundert geteilt.

Es kann allerdings als Leistungswert auch die Summe der gemessenen Leistungswerte abgespeichert werden und später eine entsprechende Normierung der Leistungswerte mit Hilfe der entsprechenden Zählwerte der ersten Zählmatrix durchgeführt werden. In einer weiteren vorteilhaften Ausführungsform werden die Leistungswerte als diskrete Werte abgespeichert. Somit wird eine spätere statistische Auswertung vorteilhaft ermöglicht.

Es werden dann bevorzugt die gleichen Verfahrensschritte in einer späteren Überwachungszeitdauer ausgeführt, wobei eine zweite Leistungsmatrix und eine zweite Zählmatrix gebildet werden.

Vorzugsweise wird zur Effizienzüberwachung ein Vergleich der mit der zweiten Zählmatrix gewichteten Leistungswerte der ersten Leistungsmatrix mit der zweiten Leistungsmatrix vorgenommen. Hierzu wird ein Vergleich der Energieerträge beispielsweise durch Multiplikation der ersten Leistungsmatrix mit der zweiten Zählmatrix und Multiplikation der zweiten Leistungsmatrix mit der zweiten Zählmatrix durchgeführt. Hierbei wird überprüft, welche Gesamtleistung oder welchen Gesamtenergieertrag der Windenergieanlagenpark in der Überwachungszeitdauer gehabt hätte, wenn eine Leistungsmatrix gemäß der Referenzzeitdauer geherrscht hätte. Dieser Wert wird entsprechend verglichen mit der tatsächlichen Gesamtleistung in der Überwachungszeitdauer.

Der Vorteil der Aufstellung der zweiten Leistungsmatrix besteht darin, dass bei erheblichen Abweichungen der Leistungswerte der zuzuordnenden Matrixelemente der Leistungsmatrizen zwischen Referenzzeitdauer und Überwachungszeitdauer die Möglichkeit besteht, bei den Leistungsmatrizen Element für Element miteinander zu vergleichen, um die Ursachen für die Abweichungen zu ermitteln. Treten die Abweichungen nur bei bestimmten Windgeschwindigkeiten oder Windrichtungen auf, kann das wichtige Hinweise für eine Fehlerdiagnose geben. Treten die Abweichungen hingegen über die gesamte Zeitdauer gleichmäßig auf, könnte die Ursache in leistungsunabhängigen Komponenten, beispielsweise Trafo oder Übergabestationen oder auch in der Messanordnung liegen.

Die erfinderische Idee hierbei ist, beispielsweise einen Jahresertrag eines Windenergieanlagenparks so zu vermessen, dass mittels einer Leistungsmatrix und einer Zählmatrix bzw. Windverteilungsmatrix der Jahresertrag in Folgejahren mittels der ersten Leistungsmatrix und einer aktuellen Windverteilungsmatrix, das heißt einer zweiten Zählmatrix, ermittelt wird. Dieses wird dann verglichen mit dem aktuellen Energieertrag oder der aktuellen Leistungssumme. Um dieses zu ermöglichen, sollten die Matrixelemente der verschiedenen Matrizen bevorzugt eine entsprechend gleiche Zuordnung für die Parameter Windgeschwindigkeit und Windrichtung haben.

Je größer die Bereiche sind, die in den Dimensionen der Matrizen abgebildet sind, das heißt je größer der Windsektor ist, der zu einem Messwert hinzugenommen wird und je größer die Windgeschwindigkeitsvariation ist, die zu einem Messwert hinzugeführt wird, umso weniger Matrixelemente treten auf und umso besser wird die Statistik für die jeweiligen Werte. Gleichzeitig wird allerdings auch die Genauigkeit der Leistungsmessung schlechter, da die Leistungswerte sich für verschiedene Windrichtungen und Windgeschwindigkeiten naturgemäß stark unterscheiden können. Aus diesem Grunde wird für jeden Windenergieanlagenpark die Größe der jeweiligen Parametersektoren der Matrizen vorzugsweise angepasst bzw. die Anzahl der Matrizenelemente vorzugsweise angepasst.

Vorzugsweise werden die Mittelwerte der gemessenen Windgeschwindigkeit und der gemessenen Windrichtung abgespeichert.

Vorzugsweise wird ein Mittelwert der Leistungswerte in den jeweiligen Matrixelementen der ersten Leistungsmatrix und der zweiten Leistungsmatrix abgespeichert. Vorzugsweise werden für die Effizienzüberwachung nur Leistungswerte berücksichtigt, die in deren zugeordneten Zählmatrix wenigstens n-Zählwerte aufweisen, wobei n eine natürliche Zahl ist, die größer eins ist und vorgebbar ist. Vorzugsweise ist n größer gleich fünf, insbesondere ist n vorzugsweise größer gleich 10, ferner vorzugsweise ist n größer gleich 15.

Hierdurch wird die Statistik deutlich verbessert und die Verlässlichkeit des Verfahrens erhöht.

Für den Fall, dass die Leistungsmatrizen bereits gemittelte Leistungen als Leistungswerte enthalten, wird bei dem Vergleich eine Summe der Produkte aus den Leistungswerten der ersten Leistungsmatrix multipliziert mit dem jeweiligen Zählwert der zweiten Zählmatrix und eine Summe der Produkte aus Leistungswerte der zweiten Leistungsmatrix multipliziert mit dem jeweiligen Zählwert der zweiten Zählmatrix gebildet. Beide Summen repräsentieren dann Energieerträge bzw. Leistungssummen und können direkt miteinander verglichen werden. Ein virtueller "Referenzenergieertrag", der entstanden wäre, wenn der Windenergieanlagenpark mit Leistungseigenschaften aus dem Referenzzeitraum im Überwachungszeitraum betrieben worden wäre, wird somit verglichen mit dem als repräsentativ gemessenen (realen) Energieertrag des Überwachungszeitraums.

Für den Fall, dass die Leistungsmatrizen die Summen der gemessenen Leistungen als Leistungswerte enthalten, wird bei dem Vergleich eine Summe der Produkte aus den Leistungswerten der ersten Leistungsmatrix multipliziert mit dem Quotienten aus dem jeweiligen Zählwert der zweiten Zählmatrix geteilt durch den jeweiligen Zählwert der ersten Zählmatrix verglichen mit der Summe der Leistungswerte der zweiten Leistungsmatrix. In diesem Fall handelt es sich bei der Leistungsmatrix eigentlich schon um eine Ertragsmatrix, da die gespeicherten Leistungen ja über die vorgebbare Zeitperiode vorgelegen haben.

Vorzugsweise wird beim Vergleich eine Summe der Leistungswerte der ersten Leistungsmatrix multipliziert mit dem jeweiligen Zählwert der zweiten Zählmatrix und eine Summe der Leistungswerte der zweiten Leistungsmatrix multipliziert mit dem jeweiligen Zählwert der zweiten Zählmatrix gebildet.

Vorzugsweise ergibt sich die Summe der während der Überwachungszeitdauer gemessenen Leistungen dadurch, dass eine Summe der Leistungswerte der zweiten Leistungsmatrix multipliziert mit dem jeweiligen Zählwert der zweiten Zählmatrix gebildet wird.

Vorzugsweise wird eine Effizienzänderung erst ab Überschreiten einer Toleranzschwelle festgestellt. Die Toleranzschwelle dient hierbei dazu, einen Unsicherheitsfaktor bzw. statistische Schwankungen aufzufangen bzw. zu berücksichtigen.

Vorzugsweise werden als weitere Parameter ein Windgradient, eine Windscherung, eine Windturbulenz, eine Luftdichte, eine Luftfeuchte und/oder eine Temperatur der Umgebung gemessen. Vorzugsweise werden diese weiteren Parameter oder zumindest ein weiterer Parameter in den verschiedenen Matrizen, d.h. der ersten Leistungsmatrix, der zweiten Leistungsmatrix, der ersten Zählmatrix und der zweiten Zählmatrix als weitere Dimension bzw. als weiteres Tupel berücksichtigt. Je mehr weitere Parameter Verwendung finden, umso genauer ist die Effizienzüberwachung, wobei allerdings zu berücksichtigen ist, dass dann die Werte in der Zählmatrix niedriger werden, je mehr weitere Parameter Berücksichtigung finden. Hierdurch wird die Statistik schlechter. Aus diesem Grunde wird hier eine Optimierung stattfinden, um nicht zu viele weitere Parameter zu berücksichtigen. Welche weiteren Parameter zu berücksichtigen sind, hängt maßgeblich von der Lage des Windenergieanlagenparks und die äußeren Rahmenbedingungen ab. Bei einem Standort, bei dem sehr hohe Luftdichteschwankungen vorherrschen, wird es sinnvoll sein, die Luftdichte mit zu berücksichtigen. Bei einem Standort, in dem ein sehr großer zeitlich veränderlicher Windgradient (d.h. horizontale oder vertikale Windscherung) zu verzeichnen ist, wird es sinnvoll sein, diesen zu berücksichtigen.

Vorzugsweise werden als weiterer Parameter ein Spannungsniveau im elektrischen Netz und/oder eine Blindleistungseinspeisung berücksichtigt. Dies ist insbesondere für den Fall von Interesse, bei dem ein Windenergieanlagenpark beispielsweise an ein Netz gekoppelt ist, bei dem der Netzbetreiber mit einer hohen Wahrscheinlichkeit fordert, dass entsprechend viel Blindleistung einzuspeisen ist, um das Netz zu stützen. In diesem Fall wirkt sich eine erhöhte Blindleistungseinspeisung auf die gemessenen Leistungen aus, was sinnvollerweise zu berücksichtigen ist. Auch für diese weiteren Parameter ist es dann sinnvoll, eine weitere Dimension in den vorliegenden Matrizen bzw. jeweils ein weiteres Tupel vorzusehen. Demgemäß ist es bevorzugt, wenn für einen weiteren Parameter die erste Leistungsmatrix, die zweite Leistungsmatrix, die erste Zählmatrix und die zweite Zählmatrix eine weitere Dimension vorsehen.

Vorzugsweise ist die Referenzzeitdauer und die Überwachungszeitdauer jeweils ein vollständiges meteorologisches Jahr. Hierbei kann der Beginn und das Ende des Jahres entsprechend verschoben sein. Das heißt, ein vollständiges meteorologisches Jahr kann beispielsweise am 01.03. beginnen und am 28.02. enden oder am 01.01. beginnen und am 31.12. enden. Die Zeitdauern können auch ganzzahlige Vielfache eines meteorologischen Jahres sein, beispielsweise 2 oder 3 Jahre.

Vorzugsweise sind die Messwerte der Windgeschwindigkeiten und der Windrichtungen in vorgebbare Bereiche eingeteilt. Vorzugsweise sind die Werte der weiteren Parameter in vorgebbare Bereiche eingeteilt.

Vorzugsweise ist es möglich, gewisse Parameter bei dem Verfahren zur Effizienzüberwachung des Windenergieanlagenparks auszusparen. So kann es beispielsweise sinnvoll sein, gewisse Windrichtungssektoren nicht mit zu berücksichtigen, da bei entsprechenden Windenergieanlagenparks eine sehr große Turbulenz aus gewissen Windrichtungen bzw. Windrichtungssektoren zu erwarten ist. So kann beispielsweise eine entsprechende Leistungsmatrix, und zwar eine erste Leistungsmatrix, die als $P_{Rij}$ bezeichnet werden kann, entsprechende Matrixelemente mit den Indizes ij aufweisen, wobei i von 0 bis 25 gezählt werden kann und j beispielsweise von 105 bis 285°, wobei i die Einteilung für die Windgeschwindigkeit darstellen soll und j die Einteilung für die Windsektoren. Bei einem Beispiel, bei dem die Windsektoren jeweils 30° umfassen, würden somit 6 Sektoren vorgesehen sein für j=105° bis 285°. Die Windgeschwindigkeit ist dann auch in entsprechende Sektoren eingeteilt, beispielsweise von 0 bis 1 m/s, 1 bis 2 m/s, .... 24 bis 25 m/s. Referenzleistungen bzw. die Gesamtleistung der Referenzzeitdauer kann sich somit berechnen wie folgt:

$$\sum_{j=105°}^{285°} \sum_{i=0}^{25} \left(P_{R_{ij}} * N_{ij}\right) = RPMT \tag{1}$$

Hierbei ist RPMT der potentielle Gesamtertrag des Windenergieanlagenparks in der Überwachungszeitdauer. $N_{ij}$ sind die jeweiligen Inhalte der zweiten Zählmatrix.

Entsprechend kann ein tatsächlicher Gesamtertrag des Windenergieanlagenparks für eine Überwachungszeitdauer mit Hilfe der zweiten Leistungsmatrix berechnet werden gemäß der folgenden Formel:

$$CPMT = \sum_{j=105°}^{285°} \sum_{i=0}^{25} \left(P_{C_{ij}} * N_{ij}\right) \tag{2}$$

Wobei $P_{cij}$ die verschiedenen Leistungswerte der zweiten Leistungsmatrix sind und $N_{ij}$ die Zählwerte der zweiten Zählmatrix. Ein Vergleich von CPMT und RPMT zeigt, wie effizient der Windenergieanlagenpark in der Überwachungszeitdauer ist. Sollte CPMT deutlich kleiner sein als RPMT, müssten entsprechende Maßnahmen ergriffen werden, wie beispielsweise das Säubern der Rotorblätter oder Beseitigen von Bewuchs in der Nähe des Windenergieanlagenparks, beispielsweise von Bäumen, die möglicherweise zu hoch gewachsen sind.

Es kann ein Ertragsverhältnis PR gebildet werden, wie folgt:

$$PR = \left(1 - \frac{CPMT}{RPMT}\right) * 100 \tag{3}$$

Mit dem Verfahren zur Effizienzüberwachung des Windenergieanlagenparks könnten sogar wirtschaftliche Belange berücksichtigt werden, wie beispielsweise die Überprüfung dessen, ob der Windenergieanlagenpark eine von dem Windenergieanlagenparkhersteller dem Betreiber versprochene Leistung bereitstellt. Hierzu könnte auch eine Vertragsstrafe berechnet werden, die für den Fall greift, dass die Effizienz des Parks im Laufe der Zeit sich deutlich reduziert. Eine entsprechende Kompensationszahlung könnte durchgeführt werden über die folgende Formel:

$$CP = EPC * (PR - 1.28 * UC) * FI$$

(4)

wobei CP die Kompensationszahlung ist, EPC die Energieproduktion einer Überwachungszeitdauer in kWh, PR nach der obigen Formel 3 berechnet wird, UC eine festlegbare Ungenauigkeit des Modells in Prozent ist und FI die Kosten pro kWh sind. Der Faktor 1.28 ist ein im Prinzip frei wählbarer Faktor für die Unsicherheiten des Verfahrens, die über die Standardabweichung erfasst ist.

Der Faktor 1.28 wird auch als sogenannter "coverage factor" bezeichnet, durch den die Aussagesicherheit (confidence level) erhöht wird.

Es gilt:

1.0 entspricht 68% confidence level
2.58 entspricht 99% confidence level
3.0 entspricht 99.7% confidence level

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:

Fig. 1    einen schematischen Ablauf eines Teils des erfindungsgemäßen Verfahrens,

Fig. 2    einen schematischen Verfahrensablauf eines Teils des erfindungsgemäßen Verfahrens,

Fig. 3    eine schematische Leistungsmatrix und

Fig. 4    eine schematische Zählmatrix.

In den Zeichnungen sind jeweils gleiche oder gleichartige Elemente und/oder Teile mit denselben Bezugsziffern versehen, so dass von einer erneuten Vorstellung jeweils abgesehen wird.

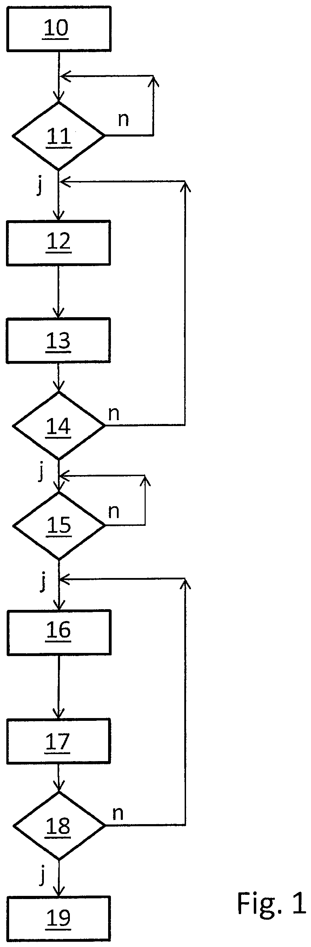

Fig. 1 zeigt ein schematisches Flussdiagramm eines erfindungsgemäßen Verfahrens in einem Ausführungsbeispiel. Das Verfahren zur Effizienzüberwachung eines Windenergieanlagenparks wird bei 10 gestartet. Bei 11 wird abgefragt, ob die Referenzzeitdauer begonnen hat. Wird diese Frage mit nein beantwortet, geht es zurück zu der Verbindung zwischen den Kästchen 10 und 11. Wird diese Frage mit ja beantwortet, wird bei 12 die Windgeschwindigkeit $V_W$, die Windrichtung $R_W$ und die Leistung bzw. der Leistungswert, der dieser Windgeschwindigkeit und dieser Windrichtung zugeordnet wird, nämlich P $(V_W, R_W)$, gemessen. Bei 13 werden dann die Leistungswerte in einer ersten Leistungsmatrix gespeichert, und zwar in einem Matrixelement, das der gemessenen Windgeschwindigkeit und der gemessenen Windrichtung entspricht, und außerdem wird zu dem Wert in einer ersten Zählmatrix bei dem Matrixelement, das dieser gemessenen Windgeschwindigkeit und der gemessenen Windrichtung entspricht, die Zahl 1 hinzuaddiert. Vor der Messung sind die Matrixelemente auf 0 gestellt.

Bei 14 wird dann gefragt, ob die Referenzzeitdauer vorbei ist. Bei einer Referenzzeitdauer von einem Jahr wird dieses noch nicht der Fall sein. Damit geht es zurück vor den Kasten 12, wo die Windgeschwindigkeit, die Windrichtung und die Leistung, die dieser Windgeschwindigkeit und dieser Windrichtung zugeordnet wird, gemessen werden. Es erfolgt dann auch ein Abspeichern dieser Werte in der ersten Leistungsmatrix und der ersten Zählmatrix. Sollten sich die Windgeschwindigkeit und die Windrichtung nicht geändert haben bzw. nicht so sehr geändert haben, dass diese Werte in ein anderes Matrixelement abzuspeichern sind, wird der Wert 1 in dieses Matrixelement in die erste Zählmatrix hinzuaddiert, so dass dort nun eine 2 steht und in der ersten Leistungsmatrix die gemessene Leistung hinzuaddiert. Es kann auch vorgesehen sein, in der ersten Leistungsmatrix ausschließlich gemittelte Werte abzuspeichern, so dass dann die beiden Messwerte, die inzwischen genommen wurden, addiert werden und dann durch zwei dividiert werden. Bei einer Mittelung ist hierbei an beliebige Mittelungsverfahren zu denken, wie beispielsweise arithmetisch, geometrisch oder eine andere Mittelung.

Entsprechend können auch im Verlauf des Verfahrens mehrere Messwerte pro Matrixelement auftauchen, deren Mittelwert dann im Hinblick auf die Leistungswerte, die in die erste Leistungsmatrix einzuschreiben sind, gebildet werden.

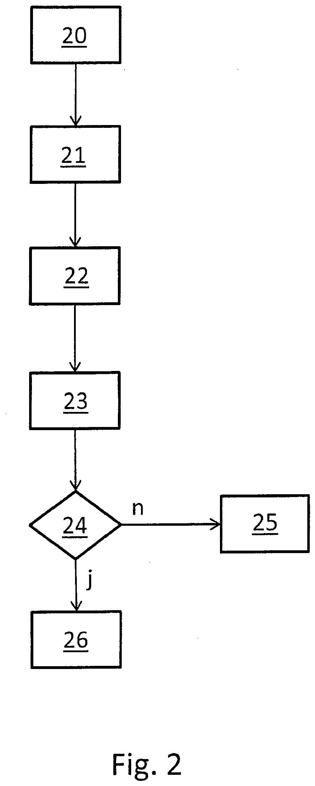

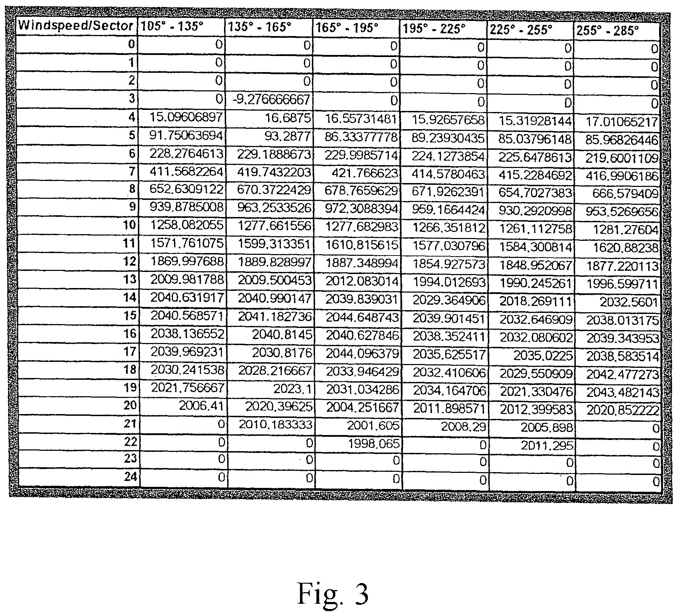

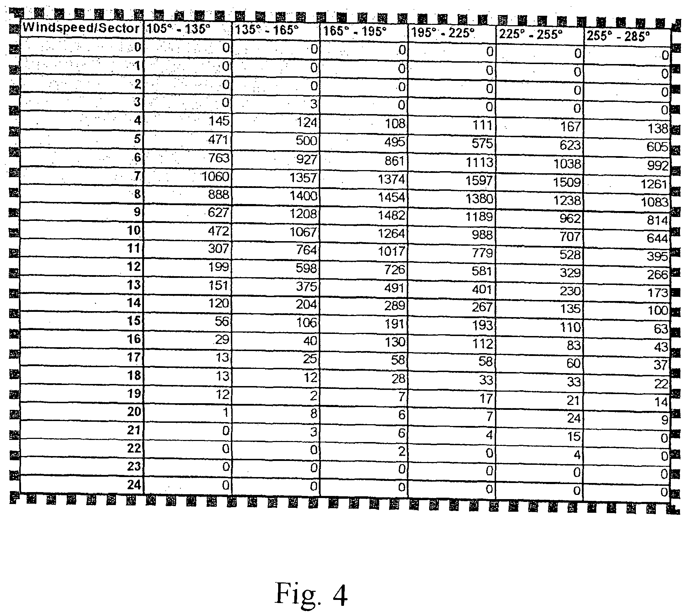

Die Messzeit, d.h. die Zeit innerhalb der die Windgeschwindigkeit, die Windrichtung und der Leistungswert betreffend diese Windgeschwindigkeit und die Windrichtung gemessen werden, kann beispielsweise zehn Minuten betragen. Es kann hier auch ein Mittelwert der entsprechenden Messwerte gebildet werden. Zur Veranschaulichung sind in Fig. 3 eine entsprechende Leistungsmatrix und in Fig. 4 eine entsprechende Zählmatrix dargestellt. Hierauf wird allerdings bei der Bezugnahme auf die Fig. 3 und 4 noch näher einzugehen sein. Sofern die Referenzzeitdauer vorbei ist, also die Abfrage bei 14 mit ja beantwortet wird, wird abgefragt, ob die Überwachungszeitdauer bei 15 begonnen hat. Bei nein geht es zurück zu den Blöcken 14 und 15 und bei ja geht es weiter mit dem Block 16, wo wieder wie in Block 12 die Windgeschwindigkeit $V_W$, die Windrichtung Rw sowie der Leistungswert P ($V_W$, $R_W$) gemessen werden und entsprechend dieser Windstärke und dieser Windrichtung zugeordnet werden. Der Leistungswert wird dann in einer zweiten Leistungsmatrix gespeichert und in einer zweiten Zählmatrix wird der Wert 1 zu dem Matrixelement hinzuaddiert, der der gemessenen Windgeschwindigkeit und der gemessen Windrichtung entspricht. Anschließend wird bei 18 abgefragt, ob die Überwachungszeitdauer vorbei ist. Ist dies nicht der Fall, geht es zurück zum Block 16. Ist dieses der Fall, findet in Block 19 die Effizienzüberwachung bzw. eine Evaluierung der Effizienz des Windenergieanlagenparks statt. Der letzte Verfahrensschritt ist in Fig. 2 schematisch in einem Verfahrensablaufdiagramm dargestellt.

In Fig. 2 beginnt die Evaluierung der Effizienz bzw. die Bestimmung der Effizienz oder das Feststellen einer Effizienzänderung des Windenergieanlagenparks bei 20. Im nächsten Block bei 21 wird über die oben beispielsweise über die oben genannte Formel 1 die Gesamtreferenzleistung RPMT berechnet. Bei 22 wird die Gesamtüberwachungsleistung gemäß der obigen Formel 2 als CPMT berechnet. Bei 23 wird gemäß der obigen Formel 3 das Leistungsverhältnis berechnet als PR. Bei 24 findet eine Abfrage statt, nämlich ist das Leistungsverhältnis kleiner gleich eine vorgebbare Zahl. Ist dieses nicht der Fall, ist das Verfahren bei 25 so zu beenden, dass keine weiteren Maßnahmen zu ergreifen sind und falls dieses bejaht wird, d.h. die Effizienz des Windenergieanlagenparks sich zu stark verringert hat, bei 26 entsprechenden Maßnahmen zu evaluieren, um die Effizienz wieder zu steigern oder eine Kompensation vorzusehen.

Es kann hierbei vorgesehen sein, dass nur diejenigen Leistungswerte bei der Berechnung der Gesamtreferenzleistung und der Gesamtüberwachungsleistung berücksichtigt werden, die in der ersten Zählmatrix und der zweiten Zählmatrix einen ausreichend hohen Zählwert aufweisen, um stochastische Unsicherheiten zu eliminieren. Fehlende Matrixelemente können gegebenenfalls interpoliert werden, oder, falls die Unsicherheiten zu groß sind, wird dieser Bereich aus der Evaluierung ausgespart.

In Fig. 3 ist eine Leistungsmatrix schematisch dargestellt, die in 25 Windstärkesektoren (wind speed) aufgeteilt ist. Die dort angegebenen Windstärken gehen von 0 m/s bis 24 m/s. Zudem ist die Leistungsmatrix in Windrichtungsbereiche, hier Sectors genannt, eingeteilt, nämlich in die Windrichtungsbereiche von 105° bis 135° als ersten Bereich, in 135° bis 165° als zweiten Bereich usw. bis zum Bereich 255° bis 285°. Die in den Matrixelementen angegebenen Leistungen sind Durchschnittsleistungen in kW.

In der schematisch in Fig. 4 gezeigten Zählmatrix sind die gleichen Matrixelemente bzw. Zuordnungen zu den Windstärkesektoren und Windrichtungsbereichen vorgenommen. Die dort angegebenen Zahlen zeigen die Häufigkeit einer entsprechenden Windstärke bei einer entsprechenden Windrichtung bzw. einem entsprechenden Windrichtungsbereich an.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Merkmale, die mit "insbesondere" gekennzeichnet sind, sind als fakultative Merkmale zu verstehen.

Bezugszeichenliste

| 10 | Start |
| 11 | Beginn Referenzzeit Dauer? |
| 12 | Messen $V_W$, $R_W$, P ($V_W$, $R_W$) |
| 13 | Speichern in erster Leistungsmatrix und in erster Zählmatrix |
| 14 | Referenzzeitdauer vorbei? |
| 15 | Beginn Überwachungszeitdauer? |
| 16 | Messen $V_W$, $R_W$, P ($V_W$, $R_W$) |
| 17 | Speichern in zweiter Leistungsmatrix und in zweiter Zählmatrix |
| 18 | Überwachungszeitdauer vorbei? |
| 19 | Effizienzevaluierung |
| 20 | Start Effizienzevaluierung |
| 21 | Berechne RPMT |
| 22 | Berechne CPMT |

23 Berechne PR
24 PR ≤ vorgebbare Zahl?
25 Ende
26 Maßnahmen evaluieren
j ja
n nein

**Patentansprüche**

1. Verfahren zur Effizienzüberwachung eines Windenergieanlagenparks mit den folgenden Verfahrensschritten:

   - Messen (12) wenigstens einer Windgeschwindigkeit und einer Windrichtung über eine vorgebbare Zeitperiode,
   - Messen (12) einer Leistung des Windenergieanlagenparks in der vorgebbaren Zeitperiode,
   - Zuordnung der Leistung zu der gemessenen Windgeschwindigkeit und der gemessenen Windrichtung,
   - Speichern (13) der Leistung als Leistungswert in eine erste Leistungsmatrix, in der Matrixelemente verschiedenen Parametern, umfassend wenigstens Windgeschwindigkeiten und Windrichtungen, zugeordnet sind, sofern die Leistung einen repräsentativen Wert für den Windenergieanlagenpark darstellt,

   **dadurch gekennzeichnet, dass** das Verfahren die folgenden weiteren Verfahrensschritte aufweist:

   - Vorsehen einer ersten Zählmatrix mit Matrixelementen, die den verschiedenen Parametern, umfassend wenigstens Windgeschwindigkeiten und Windrichtungen, zugeordnet sind,
   - Addieren eines Zählwertes zu dem Matrixelement der ersten Zählmatrix, das der gemessenen Windgeschwindigkeit und der gemessenen Windrichtung entspricht,
   - wobei die vorstehenden Verfahrensschritte für eine Vielzahl von vorgebbaren Zeitperioden in einer Referenzzeitdauer ausgeführt werden,
   - wobei in einer späteren Überwachungszeitdauer die folgenden Verfahrensschritte für eine Vielzahl von vorgebbaren Zeitperioden ausgeführt werden:

     - Messen (16) wenigstens der Windgeschwindigkeit und der Windrichtung über die vorgebbare Zeitperiode,
     - Messen (16) einer Leistung des Windenergieanlagenparks in der vorgebbaren Zeitperiode,
     - Vorsehen einer zweiten Zählmatrix mit Matrixelementen, die den verschiedenen Parametern, umfassend wenigstens Windgeschwindigkeiten und Windrichtungen, zugeordnet wird,
     - Addieren eines Zählwertes zu dem Matrixelement der zweiten Zählmatrix, das der gemessenen Windgeschwindigkeit und der gemessenen Windrichtung entspricht,

   - wobei zur Effizienzüberwachung ein Vergleich der mit der zweiten Zählmatrix gewichteten Leistungswerte der ersten Leistungsmatrix mit der Summe der während der Überwachungszeitdauer gemessenen Leistungen erfolgt.

2. Verfahren nach Anspruch 1, **dadurch gekennzeichnet, dass** die Verfahrensschritte für eine repräsentative Vielzahl von vorgebbaren Zeitperioden in der Referenzzeitdauer und der Überwachungszeitdauer durchgeführt werden.

3. Verfahren nach Anspruch 1 oder 2, **dadurch gekennzeichnet, dass** während der Überwachungszeitdauer eine zweite Leistungsmatrix dadurch gebildet wird, dass die in der Überwachungszeitdauer gemessenen Leistungen zu den in der jeweiligen Zeitperiode gemessenen Windgeschwindigkeiten und Windrichtungen zugeordnet werden und dass die Leistungen als Leistungswerte in der zweiten Leistungsmatrix gespeichert werden, wobei den Leistungswerten in der zweiten Leistungsmatrix verschiedene Parameter, umfassend wenigstens Windgeschwindigkeiten und Windrichtungen, zugeordnet sind.

4. Verfahren nach einem der Ansprüche 1 bis 3, **dadurch gekennzeichnet, dass** ein Mittelwert der Windgeschwindigkeit und ein Mittelwert der Windrichtung gebildet werden.

5. Verfahren nach Anspruch 3 oder 4, **dadurch gekennzeichnet, dass** ein Mittelwert der Leistungswerte in den jeweiligen Matrixelementen der ersten Leistungsmatrix und der zweiten Leistungsmatrix abgespeichert werden.

6. Verfahren nach einem der Ansprüche 1 bis 5, **dadurch gekennzeichnet, dass** für die Effizienzüberwachung nur Leistungswerte berücksichtigt werden, die in der zugeordneten Zählmatrix wenigstens n Zählwerte aufweisen, wobei n eine natürliche Zahl ist, die größer als 1 ist und vorgebbar ist.

7. Verfahren nach einem der Ansprüche 3 bis 6, **dadurch gekennzeichnet, dass** beim Vergleich der auf die zweite Zählmatrix normierten Leistungswerte der ersten Leistungsmatrix mit der Summe der während der Überwachungszeitdauer gemessenen Leistungen eine Summe der Leistungswerte der ersten Leistungsmatrix multipliziert mit dem jeweiligen Zählwert der zweiten Zählmatrix gebildet wird, wobei die beiden gebildeten Summen dann verglichen werden.

8. Verfahren nach einem der Ansprüche 3 bis 7, **dadurch gekennzeichnet, dass** die Summe der während der Überwachungszeitdauer gemessenen Leistungen sich dadurch ergibt, dass eine Summe der Leistungswerte der zweiten Leistungsmatrix multipliziert mit dem jeweiligen Zählwert der zweiten Zählmatrix gebildet wird.

9. Verfahren nach einem der Ansprüche 1 bis 8, **dadurch gekennzeichnet, dass** eine Effizienzänderung erst ab Überschreiten einer Toleranzschwelle festgestellt wird.

10. Verfahren nach einem der Ansprüche 1 bis 9, **dadurch gekennzeichnet, dass** als weiterer Parameter ein Windgradient, eine Windscherung, eine Windturbulenz, eine Luftdichte, eine Luftfeuchte und/oder eine Temperatur der Umgebung gemessen und berücksichtigt werden.

11. Verfahren nach einem der Ansprüche 1 bis 10, **dadurch gekennzeichnet, dass** als weiterer Parameter ein Spannungsniveau im elektrischen Netz und/oder eine Blindleistungseinspeisung berücksichtigt werden.

12. Verfahren nach Anspruch 10 oder 11, **dadurch gekennzeichnet, dass** für einen weiteren Parameter die erste Leistungsmatrix, die zweite Leistungsmatrix, die erste Zählmatrix und die zweite Zählmatrix jeweils eine weitere Dimension vorsieht.

13. Verfahren nach einem der Ansprüche 1 bis 11, **dadurch gekennzeichnet, dass** die Referenzzeitdauer und die Überwachungszeitdauer jeweils ein vollständiges meteorologisches Jahr oder ein ganzzahliges Vielfaches eines meteorologischen Jahres ist.

14. Verfahren nach einem der Ansprüche 1 bis 13, **dadurch gekennzeichnet, dass** die Messwerte der Windgeschwindigkeit und der Windrichtung in vorgebbare Bereiche eingeteilt sind.

15. Verfahren nach einem der Ansprüche 1 bis 14, **dadurch gekennzeichnet, dass** die Werte der weiteren Parameter in vorgebbare Bereiche eingeteilt sind.

**Claims**

1. A method of monitoring the efficiency of a wind farm, the method comprising the following process steps:

   - measuring (12) at least one wind speed and at least one wind direction during a specifiable time period,
   - measuring (12) an output power of the wind farm in the specifiable time period,
   - associating the output power with the measured wind speed and the measured wind direction,
   - storing (13) the output power as an output power value in a first power matrix, in which matrix elements are associated with various parameters comprising at least wind speeds and wind directions, as long as the output power represents a representative value for the wind farm,

   **characterized in that** the method comprises the following further process steps:

   - providing a first counting matrix having matrix elements which are associated with the various parameters comprising at least wind speeds and wind directions,
   - adding a counting value to the matrix element of the first counting matrix that corresponds to the measured wind speed and the measured wind direction,
   - wherein the preceding process steps are carried out for a plurality of specifiable time periods in a reference time period,
   - wherein the following process steps are carried out in a later monitoring time period for a plurality of specifiable time periods:

- measuring (16) at least the wind speed and the wind direction during the specifiable time period,
- measuring (16) an output power of the wind farm in the specifiable time period,
- providing a second counting matrix having matrix elements that are associated with the various parameters comprising at least wind speeds and wind directions,
- adding a counting value to the matrix element of the second counting matrix that corresponds to the measured wind speed and the measured wind direction,

- wherein, in order to monitor the efficiency, a comparison is performed between the output power values of the first power matrix weighted with the second counting matrix, and the sum of the output power values measured during the monitoring time period.

2. The method according to claim 1, **characterized in that** the process steps are performed for a representative plurality of specifiable time periods in the reference time period and the monitoring time period.

3. The method according to claim 1 or 2, **characterized in that** a second power matrix is formed during the monitoring time period by associating the output power values measured during the monitoring time period with the wind speeds and wind directions measured in the respective time period, and by storing the output power values as output power values in the second power matrix, wherein various parameters comprising at least wind speeds and wind directions are associated with the output power values in the second power matrix.

4. The method according to any one of the claims 1 to 3, **characterized in that** an average value of the wind speed and an average value of the wind direction is formed.

5. The method according to claim 3 or 4, **characterized in that** average values of the output power values are stored in the respective matrix elements of the first power matrix and the second power matrix.

6. The method according to any one of the claims 1 to 5, **characterized in that**, in order to monitor the efficiency, only those output power values are taken into account which have at least n counting values in the respective counting matrix, wherein n is a natural number which is larger than 1 and is specifiable.

7. The method according to any one of the claims 3 to 6, **characterized in that**, during the comparison of the output power values of the first power matrix normed to the second counting matrix with the sum of the output power values measured during the monitoring time period, a sum of the output power values of the first power matrix multiplied by the corresponding counting value of the second counting matrix is formed, wherein the two sums are then compared.

8. The method according to any one of the claims 3 to 7, **characterized in that** the sum of the output power values measured during the monitoring time period results from forming a sum of the output power values of the second power matrix multiplied by the corresponding counting value of the second counting matrix.

9. The method according to any one of the claims 1 to 8, **characterized in that** an efficiency change is found only when a tolerance threshold is passed.

10. The method according to any one of the claims 1 to 9, **characterized in that** a wind gradient, a wind shear, a wind turbulence, an air density, an air humidity and/or a temperature of the surroundings is measured and taken into account as a further parameter.

11. The method according to any one of the claims 1 to 10, **characterized in that** a voltage level in the electricity network and/or a reactive power feeding is taken into account as a further parameter.

12. The method according to claim 10 or 11, **characterized in that** the first power matrix, the second power matrix, the first counting matrix and the second counting matrix are each provided with a further dimension for a further parameter.

13. The method according to any one of the claims 1 to 11, **characterized in that** each of the reference time period and the monitoring time period are a complete meteorological year or an integer multiple of a meteorological year.

**14.** The method according to any one of the claims 1 to 13, **characterized in that** the measurement values of the wind speed and the wind direction are divided into specifiable ranges.

**15.** The method according to any one of the claims 1 to 14, **characterized in that** the values of the further parameters are divided into specifiable ranges.

**Revendications**

**1.** Procédé servant à surveiller le rendement d'un parc d'éoliennes, comprenant les étapes de procédé qui suivent consistant à :

- mesurer (12) au moins une vitesse du vent et une direction du vent sur une période de temps pouvant être spécifiée,
- mesurer (12) une puissance du parc d'éoliennes dans la période de temps pouvant être spécifiée,
- associer la puissance à la vitesse du vent mesurée et à la direction du vent mesurée,
- mémoriser (13) la puissance en tant que valeur de puissance dans une première matrice de puissance, dans laquelle des éléments de matrice sont associés à des paramètres différents comprenant au moins des vitesses de vent et des directions de vent dans la mesure où la puisse constitue une valeur représentative du parc d'éoliennes,

**caractérisé en ce que** le procédé présente les autres étapes de procédé qui suivent consistant à :

- prévoir une première matrice de comptage comprenant des éléments de matrice, qui sont associés à des paramètres différents comprenant au moins des vitesses de vent et des directions de vent,
- ajouter une valeur de comptage à l'élément de matrice de la première matrice de comptage, qui correspond à la vitesse de vent mesurée et à la direction de vent mesurée,
- dans lequel les étapes de procédé ci-avant sont exécutées pour une pluralité de périodes de temps pouvant être spécifiées dans une durée de référence,
- dans lequel sont exécutées, dans une durée de surveillance ultérieure pour une pluralité de périodes de temps pouvant être spécifiées, les étapes de procédé qui suivent consistant à :
- mesurer (16) au moins la vitesse de vent et la direction de vent sur la période de temps pouvant être spécifiée,
- mesurer (16) une puissance du parc d'éoliennes dans la période de temps pouvant être spécifiée,
- prévoir une deuxième matrice de comptage comprenant des éléments de matrice, qui est associée à des paramètres différents comprenant au moins des vitesses de vent et des directions de vent,
- ajouter une valeur de comptage à l'élément de matrice de la deuxième matrice de comptage, qui correspond à la vitesse de vent mesurée et à la direction de vent mesurée,
- dans lequel une comparaison des valeurs de puissance, pondérées avec la deuxième matrice de comptage, de la première matrice de puissance à la somme des puissances mesurées au cours de la durée de surveillance est effectuée aux fins de la surveillance du rendement.

**2.** Procédé selon la revendication 1, **caractérisé en ce que** les étapes de procédé sont mises en oeuvre pour une pluralité représentative de périodes de temps pouvant être spécifiées dans la durée de référence et la durée de surveillance.

**3.** Procédé selon la revendication 1 ou 2, **caractérisé en ce qu'**une deuxième matrice de puissance est formée au cours de la durée de surveillance **en ce que** les puissances mesurées dans la durée de surveillance sont associées aux vitesses de vent et directions de vent mesurées dans la période de temps respective, et que les puissances sont mémorisées en tant que valeurs de puissance dans la deuxième matrice de puissance, dans lequel des paramètres différents, comprenant au moins des vitesses de vent et des directions de vent, sont associés aux valeurs de puissance dans la deuxième matrice de puissance.

**4.** Procédé selon l'une quelconque des revendications 1 à 3, **caractérisé en ce qu'**une valeur moyenne de la vitesse de vent et une valeur moyenne de la direction de vent sont obtenues.

**5.** Procédé selon la revendication 3 ou 4, **caractérisé en ce qu'**une valeur moyenne des valeurs de puissance est sauvegardée dans les éléments de matrice respectifs de la première matrice de puissance et de la deuxième matrice de puissance.

**6.** Procédé selon l'une quelconque des revendications 1 à 5, **caractérisé en ce que** sont pris en compte pour la surveillance du rendement seulement des valeurs de puissance, qui présentent dans la matrice de comptage associée au moins n valeurs de comptage, dans lequel n est un nombre naturel, qui est supérieur à 1 et qui peut être spécifié.

**7.** Procédé selon l'une quelconque des revendications 3 à 6, **caractérisé en ce que** lors de la comparaison des valeurs de puissance, normées sur la deuxième matrice de comptage, de la première matrice de puissance à la somme des puissances mesurées au cours de la durée de surveillance, une somme des valeurs de puissance de la première matrice de puissance multipliée avec la valeur de comptage respective de la deuxième matrice de comptage est obtenue, dans lequel les deux sommes obtenues sont alors comparées.

**8.** Procédé selon l'une quelconque des revendications 3 à 7, **caractérisé en ce que** la somme des puissances mesurées au cours de la durée de surveillance résulte **en ce qu'**une somme des valeurs de puissance de la deuxième matrice de puissance multipliée avec la valeur de comptage respective de la deuxième matrice de comptage est obtenue.

**9.** Procédé selon l'une quelconque des revendications 1 à 8, **caractérisé en ce qu'**une modification de rendement est constatée seulement à compter du dépassement d'un seuil de tolérance.

**10.** Procédé selon l'une quelconque des revendications 1 à 9, **caractérisé en ce que** sont mesurés et pris en compte en tant qu'autre paramètre un gradient du vent, un cisaillement du vent, une turbulence du vent, une densité atmosphérique, une humidité de l'air et/ou une température de l'environnement.

**11.** Procédé selon l'une quelconque des revendications 1 à 10, **caractérisé en ce que** sont pris en compte en tant qu'autre paramètre un niveau de tension dans le réseau électrique et/ou une injection de puissance apparente.

**12.** Procédé selon la revendication 10 ou 11, **caractérisé en ce que** pour un autre paramètre, la première matrice de puissance, la deuxième matrice de puissance, la première matrice de comptage et la deuxième matrice de comptage prévoient respectivement une autre dimension.

**13.** Procédé selon l'une quelconque des revendications 1 à 11, **caractérisé en ce que** la durée de référence et la durée de surveillance sont respectivement une année météorologique complète ou un multiple entier d'une année météorologique.

**14.** Procédé selon l'une quelconque des revendications 1 à 13, **caractérisé en ce que** les valeurs de mesure de la vitesse du vent et la direction du vent sont réparties dans des plages pouvant être spécifiées.

**15.** Procédé selon l'une quelconque des revendications 1 à 14, **caractérisé en ce que** les valeurs des autres paramètres sont réparties dans des plages pouvant être spécifiées.

Fig. 1

Fig. 2

| Windspeed/Sector | 105° - 135° | 135° - 165° | 165° - 195° | 195° - 225° | 225° - 255° | 255° - 285° |
|---|---|---|---|---|---|---|
| 0 | 0 | 0 | 0 | 0 | 0 | 0 |
| 1 | 0 | 0 | 0 | 0 | 0 | 0 |
| 2 | 0 | 0 | 0 | 0 | 0 | 0 |
| 3 | 0 | -9.276666667 | 0 | 0 | 0 | 0 |
| 4 | 15.09606897 | 16.6875 | 16.55731481 | 15.92657658 | 15.31928144 | 17.01065217 |
| 5 | 91.75063694 | 93.2877 | 86.33377778 | 89.23930435 | 85.03796148 | 85.96826446 |
| 6 | 228.2764613 | 229.1888673 | 229.9985714 | 224.1273854 | 225.6478613 | 219.6001109 |
| 7 | 411.5682264 | 419.7432203 | 421.766623 | 414.5780463 | 415.2284692 | 416.9906186 |
| 8 | 652.6309122 | 670.3722429 | 678.7659629 | 671.9262391 | 654.7027383 | 666.579409 |
| 9 | 939.8785008 | 963.2533526 | 972.3088394 | 959.1664424 | 930.2920998 | 953.5269656 |
| 10 | 1258.082055 | 1277.661556 | 1277.682983 | 1266.351812 | 1261.112758 | 1281.27604 |
| 11 | 1571.761075 | 1599.313351 | 1610.815615 | 1577.030796 | 1584.300814 | 1620.88238 |
| 12 | 1869.997688 | 1889.828997 | 1887.348994 | 1854.927573 | 1848.952067 | 1877.220113 |
| 13 | 2009.981788 | 2009.500453 | 2012.083014 | 1994.012693 | 1990.245261 | 1996.599711 |
| 14 | 2040.631917 | 2040.990147 | 2039.839031 | 2029.364906 | 2018.269111 | 2032.5601 |
| 15 | 2040.568571 | 2041.182736 | 2044.648743 | 2039.901451 | 2032.646909 | 2038.013175 |
| 16 | 2038.136552 | 2040.8145 | 2040.627846 | 2038.352411 | 2032.080602 | 2039.343953 |
| 17 | 2039.969231 | 2030.8176 | 2044.096379 | 2035.625517 | 2035.0225 | 2038.583514 |
| 18 | 2030.241538 | 2028.216667 | 2033.946429 | 2032.410606 | 2029.550909 | 2042.477273 |
| 19 | 2021.756667 | 2023.1 | 2031.034286 | 2034.164706 | 2021.330476 | 2043.482143 |
| 20 | 2006.41 | 2020.39625 | 2004.251667 | 2011.898571 | 2012.399583 | 2020.852222 |
| 21 | 0 | 2010.183333 | 2001.605 | 2008.29 | 2005.898 | 0 |
| 22 | 0 | 0 | 1998.065 | 0 | 2011.295 | 0 |
| 23 | 0 | 0 | 0 | 0 | 0 | 0 |
| 24 | 0 | 0 | 0 | 0 | 0 | 0 |

Fig. 3

| Windspeed/Sector | 105° - 135° | 135° - 165° | 165° - 195° | 195° - 225° | 225° - 255° | 255° - 285° |
|---|---|---|---|---|---|---|
| 0 | 0 | 0 | 0 | 0 | 0 | 0 |
| 1 | 0 | 0 | 0 | 0 | 0 | 0 |
| 2 | 0 | 0 | 0 | 0 | 0 | 0 |
| 3 | 0 | 3 | 0 | 0 | 0 | 0 |
| 4 | 145 | 124 | 108 | 111 | 167 | 138 |
| 5 | 471 | 500 | 495 | 575 | 623 | 605 |
| 6 | 763 | 927 | 861 | 1113 | 1038 | 992 |
| 7 | 1060 | 1357 | 1374 | 1597 | 1509 | 1261 |
| 8 | 888 | 1400 | 1454 | 1380 | 1238 | 1083 |
| 9 | 627 | 1208 | 1482 | 1189 | 962 | 814 |
| 10 | 472 | 1067 | 1264 | 988 | 707 | 644 |
| 11 | 307 | 764 | 1017 | 779 | 528 | 395 |
| 12 | 199 | 598 | 726 | 581 | 329 | 266 |
| 13 | 151 | 375 | 491 | 401 | 230 | 173 |
| 14 | 120 | 204 | 289 | 267 | 135 | 100 |
| 15 | 56 | 106 | 191 | 193 | 110 | 63 |
| 16 | 29 | 40 | 130 | 112 | 83 | 43 |
| 17 | 13 | 25 | 58 | 58 | 60 | 37 |
| 18 | 13 | 12 | 28 | 33 | 33 | 22 |
| 19 | 12 | 2 | 7 | 17 | 21 | 14 |
| 20 | 1 | 8 | 6 | 7 | 24 | 9 |
| 21 | 0 | 3 | 6 | 4 | 15 | 0 |
| 22 | 0 | 0 | 2 | 0 | 4 | 0 |
| 23 | 0 | 0 | 0 | 0 | 0 | 0 |
| 24 | 0 | 0 | 0 | 0 | 0 | 0 |

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011081241 A1